# EUROPEAN PATENT APPLICATION

(11) **EP 1 359 571 A1**
(43) Date of publication of application: **05.11.2003**
(21) Application number: 03252609.7
(22) Date of filing: 24.04.2003
(51) Int. Cl.: G11B 5/68

(54) **Magnetic tape**

(30) Priority: 24.04.2002 US 131052
(71) Applicant: QUANTUM CORPORATION, Milpitas, CA 95035 (US)
(72) Inventor: Stoyanov, Plamen, Milford, Massachusetts 01757 (US); Seng, Daravuth, Dudly, Massachusetts 01571 (US); Neumann, Lawrence G., Lancaster, Massachusetts 01523 (US)
(74) Representative: Charig, Raymond Julian

(57) **Abstract**

A magnetic tape includes a substrate having disposed on opposite sides thereof a magnetic-layered recording surface and a non-recording surface containing a magnetic servo tracking pattern, the non-recording surface including two layers, an outer layer containing inorganic particles and an inner layer containing magnetic particles.

## Description

### TECHNICAL FIELD

This invention relates to a magnetic tape.

### BACKGROUND

A magnetic tape is generally used to store multiple tracks of data using a magnetic tape recording system. The data is written to and read from a recording or magnetic layer on the magnetic tape. A backcoat layer disposed on a side of the magnetic tape opposite the recording layer typically provides certain mechanical properties to the magnetic tape, such as stability as the tape runs past reading and recording heads. The backcoat layer often contains a binder resin and an inorganic pigment, such as carbon black.

### SUMMARY

In an aspect, the invention features a tape including a recording layer bonded to a first side of a substrate layer, and a multi-layer backcoat layer bonded to a second side of the substrate, the backcoat layer including an inner magnetic layer containing a magnetic servo track pattern and an outer non-magnetic layer.

In a preferred embodiment, a thickness of the outer non-magnetic layer is in the range of about 0.1 micrometers (µm) to 0.50 µm. A resistance of the outer non-magnetic layer is in the range of about 8.0 x 10⁴ ohms(Ω) to 2.0 x 10⁶ Ω. An arithmetic average roughness (Rₐ) of the outer non-magnetic layer is about 6.0 nanometers (nm) to 12.0 nm.

The outer non-magnetic layer may include inorganic particles contained within a binder. The inorganic particles may be about 30% to 50% by weight of the binder.

In embodiments, the inorganic particles may be carbon black, metallic powders, or metallic sulfides. The binder may be a thermoplastic resin or a reactive resin.

In a preferred embodiment, a thickness of the inner magnetic layer is in the range of about 0.10 µm to 0.50 µm. A coercivity of the inner magnetic layer is in the range of about 900 to 1900 Oe. A recording frequency of the inner magnetic layer is in the range of about 1 KHz to 6 MHz.

In embodiments, the inner magnetic layer includes magnetic particles contained within a binder.

In a preferred embodiment, a particle size of the magnetic particles is in the range of about 0.10 µm to 0.30 µm. The magnetic particles may be ferromagnetic hexagonal ferrite powder, ferromagnetic metallic powder, or ferromagnetic iron oxide powder. The binder may be a reactive resin or a thermoplastic resin.

The magnetic servo track pattern may include a longitudinal magnetic recording of different frequency ranges.

In another aspect, the invention features a magnetic tape including a substrate having disposed on opposite sides thereof a magnetic-layered recording surface and a non-recording surface containing a magnetic servo tracking pattern, the non-recording surface including two layers, an outer layer containing inorganic particles and an inner layer containing magnetic particles.

In a preferred embodiment, a size of the inorganic particles is in the range of about 0.02 µm to 0.035 µm. The inorganic particles may be contained in a binder. The inorganic particles may be about 30% to 50% by weight of the binder. The inorganic particles may be carbon black, metallic powders, or metallic sulfides.

In a preferred embodiment, a size of the magnetic particles is in the range of about 0.10 µm to 0.30 µm. The magnetic particles may be contained in a binder. The binder may be about 10 to 40 parts by weight per 100 parts by weight of the magnetic particles.

In embodiments, the magnetic particles may be ferromagnetic hexagonal ferrite powder, ferromagnetic metallic powder, or ferromagnetic iron oxide powder.

The magnetic servo track pattern may include a longitudinal magnetic recording of different frequency ranges.

In another aspect, the invention features a tape including a recording layer bonded to a first side of a substrate layer, and a multi-layer backcoat layer bonded to a second side of the substrate, the backcoat layer including an inner magnetic layer containing a magnetic servo track pattern.

In embodiments, the backcoat layer may include an outer magnetic layer. The inner magnetic layer may include magnetic particles having a particle size in the range of about 0.10 µm to 0.30 µm contained in a binder. The outer magnetic layer may include magnetic particles having a particle size in the range of about 0.02 µm to 0.035 µm contained in a binder.

Embodiments of the invention may have one or more of the following advantages.

A multilayered backcoat on a magnetic tape furnishes both magnetic servo information and appropriate mechanical properties.

An outer layer of the backcoat provides runnability and conductivity properties while an inner layer of the backcoat provides a magnetic layer than can be recorded with low frequency signals to be used as magnetic servo tracks.

The multilayered backcoat provides superior mechanical properties and permits quality magnetic servo recording.

Other features, objects, and advantages of the invention will be apparent from the description and drawings, and from the claims.

### DESCRIPTION OF DRAWINGS

FIG. 1 is a cross section of a magnetic tape.
FIG. 2 is an exemplary magnetic servo signal writer system.
FIG. 3 is an exemplary magnetic recording system.

### DETAILED DESCRIPTION

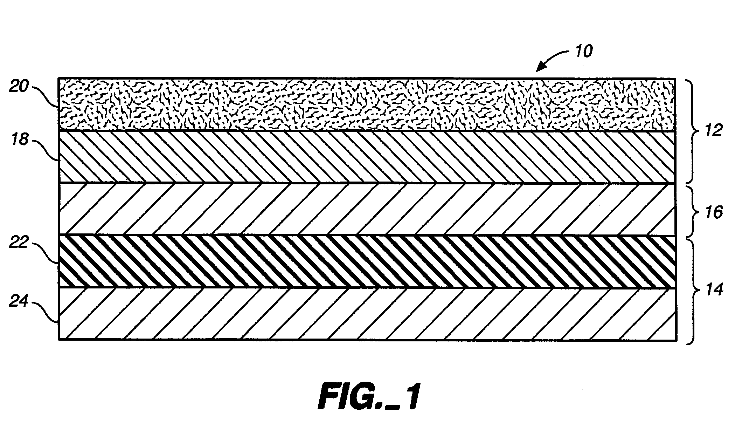

Referring to FIG. 1, a magnetic tape 10 includes a top layer 12 and a multilayered backcoat 14, both bonded to a substrate 16. The top layer 12 includes an intermediate layer 18 and a recording layer 20. The backcoat layer 14 includes an inner magnetic layer 22 and an outer non-magnetic layer 24.

The magnetic tape 10 is utilized for recording and reading data. More specifically, a magnetic tape recording system (not shown) records to and reads from a group of data tracks arranged in parallel with a tape running direction on the recording layer 20 with magnetic read/write heads. The recording and reading of data in tracks on the magnetic tape 10 requires precise positioning of the read/write heads to corresponding data tracks. The read/write heads must be quickly moved to, and maintained centered over, particular data tracks as recording and reading of data takes place.

Magnetic recording systems that read and record data on magnetic media, such as magnetic tape 10, may use magnetic servo control systems to properly position the read/write heads over data tracks. The magnetic servo control system derives a position signal from a servo magnetic head that reads magnetic servo control information recorded in magnetic servo tracks on the tape 10. In one example, magnetic servo information includes a longitudinal magnetic recording of different frequency ranges. In another example, magnetic servo information may include two parallel but dissimilar patterns. Recording dissimilar frequency ranges in parallel tracks may generate the patterns. The magnetic servo head can follow a boundary between the two dissimilar magnetic servo patterns, which are recorded in alignment with the data tracks. When the magnetic servo head is centered relative to the boundary between the magnetic servo patterns, the associated read/write head is centered relative to the data track.

The inner magnetic layer 22 of the backcoat layer 14 includes magnetic powder (or particles) dispersed in a binder and capable of magnetic servo recording. The binder is used in an amount of about 10 to 40 parts by weight per 100 parts by weight of the magnetic powder. Example magnetic powders that may be used include ferromagnetic hexagonal ferrite powder, ferromagnetic metallic powder and ferromagnetic iron oxide powder. Preferably, the size of the magnetic powder particles in the inner magnetic layer 22 is in the range of about 0.10 micrometers (µm) to 0.30 µm. The magnetic powder is selected so that the resultant inner magnetic layer 22 has a coercivity (H_{c}) in the range of about 900 to 1900 Oe, a magnetic resonance (Mᵣ) in the range of about 1000 G to 2500 G, a squareness in the range of about 0.55 to 0.90, and a recording frequency in the range of about 1 KHz to 6 MHz. The thickness of the inner magnetic layer 22 is in the range of about 0.10 µm to 0.50 µm.

The outer non-magnetic layer 24 includes inorganic particles contained within a binder to improve, for example, running properties and durability of the magnetic tape 10. The weight percentage of the inorganic particles to the binder, which is subject to variation according to the size and type of particles, is preferably about 30% to 50%. In another example, the outer layer contains magnetic particles.

The outer non-magnetic layer 24 includes a moderate to high surface roughness. The outer non-magnetic layer 24 has an arithmetic average roughness (Rₐ) in the range of about 9.0 nanometers (nm) to 12.0 nm, a ten-point height parameter (R_{z}) in the range of about 80.0 nm to 120.0 nm, and an arithmetic mean roughness (R_{q}) in the range of about 11.0 nm to 14.0 nm. The outer non-magnetic layer also exhibits a resistance in the range of about 8.0 x 10⁴ ohms (Ω) to 2.0 x 10⁶ Ω. The size of the inorganic particles in the outer non-magnetic layer 24 is in the range of about 0.02 µm to 0.035 µm.

The thickness of the outer non-magnetic layer 24 is in the range of about 0.1 µm to 0.50 µm and contains inorganic powders such as carbon black, metallic powders, metallic oxides, metallic sulfides or mixtures thereof. Example inorganic particles are TiO, TiO₂, α-Fe₂O₃, BaCO₃, BaSO₄, Fe₃O₄, α-Al₂O₃, y-Al₃O₃, CaCO₃, Cr₂O₃, ZnO, ZnSO₄, α-FeOOH, Mn-Zn ferrite, ZnS, tin oxide, antimony-doped tin oxide (ATO), indium-doped tin oxide (ITO), indium oxide, carbon black, graphite carbon, SiO2, and silicone resins having a three-dimensional network structure made up of siloxane bonds with a methyl group bonded to the silicon atom. Carbon black is preferred.

Binders used in both the inner magnetic layer 22 and outer non-magnetic layer 24 may include thermoplastic resins, reactive resins, and mixtures thereof. For example, the binder may be vinyl chloride copolymers or modified vinyl chloride copolymers, copolymers including acrylic acids, methacrylic acids or esters thereof, polyvinyl alcohol copolymers, acrylonitrile copolymers (rubbery resins), polyester resins, polyurethane resins, epoxy resins, cellulosic resins (e.g., nitrocellulose, cellulose acetate, cellulose acetate butyrate, and cellulose acetate propionate), polyvinyl butyral resins, and polyamide resins. These binders, for example, have a number average molecular weight of approximately 2,000 to approximately 200,000. The binder resin may have a polarizing function group (i.e., polar group), such as a hydroxyl group, carboxyl group or salt thereof, a sulfoxyl group or salt thereof, a phosphor group or salt thereof, a nitro group, a nitric ester group, an acetyl group, a sulfuric ester group or salt thereof, an epoxy group a nitrite group, a carbonyl group, an amino group, an alkylamino group, an alkylammonium salt group, a sulobetaine structure, a carbobetaine structure, and the like, to have improved dispersing properties for particulate additives that may be incorporated into the inner magnetic layer 22 and the outer non-magnetic layer 24.

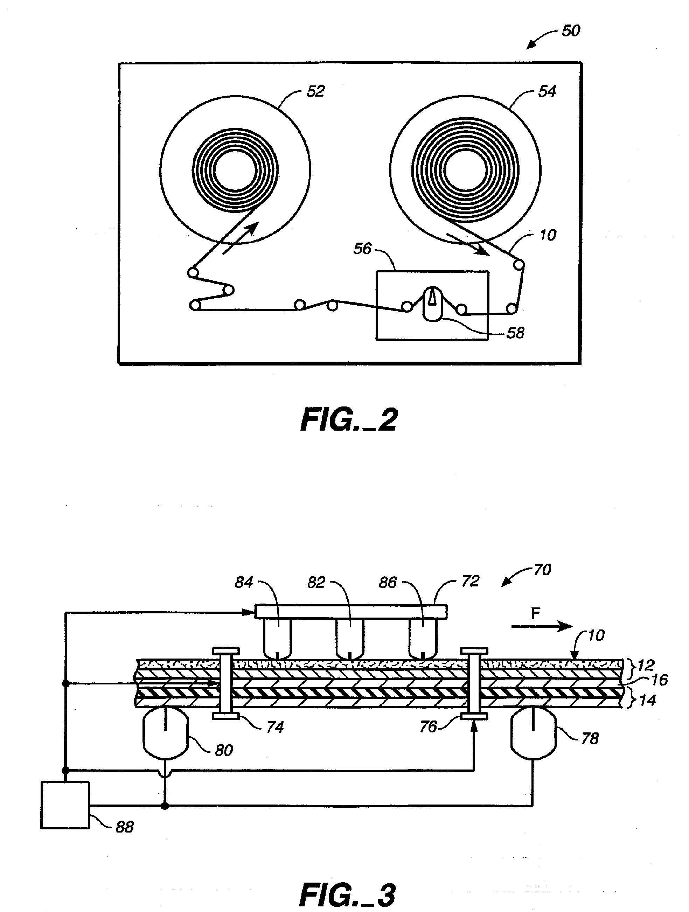

Referring to FIG. 2, a system 50 for recording magnetic servo signals on the inner magnetic layer 22 of the back coat layer 14 of the magnetic tape 10 includes a feed reel 52, a take-up reel 54, and a magnetic servo signal recording apparatus 56. The magnetic servo signal recording apparatus 56 includes a magnetic servo signal recording head 58. The magnetic tape 10 is fed through the system 50 at a predetermined speed and led into the magnetic servo signal recording apparatus 56, where magnetic servo signals are recorded on the inner magnetic layer 22 of the back coat layer 14 by the magnetic servo signal recording head 58. While only one magnetic servo signal recording head 58 is shown as an example, it is common to have multiple magnetic servo signal recording heads. Magnetic servo signals are recorded as magnetic servo tracks on portions of the inner magnetic layer 22 of the backcoat layer 14 in parallel with a longitudinal direction (i.e., running direction) of the magnetic tape 10 over the whole length of the magnetic tape 10. For example, a magnetic servo track may be the result of a longitudinal magnetic recording of different frequency ranges.

Referring to FIG. 3, an exemplary magnetic recording system 70 includes magnetic head unit 72, a pair of guide rolls 74 and 76, a forward magentic servo signal reading head 78, and a backward magnetic servo signal reading head 80. The magnetic head unit 72 includes three magnetic heads linearly arranged side by side along a tape running direction. A recording head 82 is in the middle, and a forward reproduction head 84 and a backward reproduction head 86 are on each side thereof.

In reading/writing to the magnetic tape 10 with the system 70, the top layer 12 is brought into contact with each head of the magnetic head unit 72, while the backcoat layer 14 is brought into contact with each magnetic servo signal reading head 78 and 80. When the magnetic tape 10 runs, for example, forward (in the direction indicated by arrow F), the magnetic servo signals recorded on the servo tracks of the inner magnetic layer 22 of the backcoat layer 14 are first read by the forward magnetic servo signal reading head 78. The detected magnetic servo signals provide positional information. The positional information is processed by a magnetic servo tracking processor 88 fitted to the system 70 to make a determination on whether or not the magnetic head unit 72 or the forward reproduction head 84 are on the correct positions of data tracks located on the top layer 12 of the magnetic tape 10. This determination is fed back to the respective drives (not shown) of the recording head 82 and/or the positioning guide rolls 74 and 76 to carry out magnetic servo tracking. As a result, the magnetic heads 82, 84 86 and the forward reproduction head 84 are positioned on the correct data track of the top layer 12 so data are recorded by the recording head 82 or the data recorded on that data track is read by the forward reproduction head 84.

Other embodiments are within the scope of the following claims.

## Claims

1. A tape comprising:
a recording layer bonded to a first side of a substrate layer; and
a multi-layer backcoat layer bonded to a second side of the substrate, the backcoat layer including an inner magnetic layer containing a magnetic servo track pattern and an outer non-magnetic layer.

2. The tape of claim 1 in which a thickness of the outer non-magnetic layer is in the range of about 0.1 micrometers (µm) to 0.50 µm.

3. The tape of claim 1 in which a resistance of the outer non-magnetic layer is in the range of about 8.0 x 10⁴ ohms(Ω) to 2.0 x 10⁶ Ω.

4. The tape of claim 1 in which an arithmetic average roughness (Rₐ) of the outer non-magnetic layer is about 9.0 nanometers (nm) to 12.0 nm.

5. The tape of claim 1 in which the outer non-magnetic layer comprises inorganic particles contained within a binder.

6. The tape of claim 5 in which the inorganic particles comprise about 30% to 50% by weight of the binder.

7. The tape of claim 5 in which the inorganic particles are carbon black.

8. The tape of claim 5 in which the inorganic particles are metallic powders.

9. The tape of claim 5 in which the inorganic particles are metallic sulfides.

10. The tape of claim 5 in which the binder is a thermoplastic resin.

11. The tape of claim 5 in which the binder is a reactive resin.

12. The tape of claim 1 in which a thickness of the inner magnetic layer is in the range of 0.10 µm to 0.50 µm.

13. The tape of claim 1 in which a coercivity of the inner magnetic layer is in the range of about 900 to 1900 Oe.

14. The tape of claim 1 in which a recording frequency of the inner magnetic layer is in the range of about 1 KHz to 6 MHz.

15. The tape of claim 1 in which the inner magnetic comprises magnetic particles contained within a binder.

16. The tape of claim 1 in which a particles size of the magnetic particles is in the range of about 0.10 µm to 0.30 µm.

17. The tape of claim 15 in which the magnetic particles are ferromagnetic hexagonal ferrite powder.

18. The tape of claim 15 in which the magnetic particles are ferromagnetic metallic powder.

19. The tape of claim 15 in which the magnetic particles are ferromagnetic iron oxide powder.

20. The tape of claim 15 in which the binder is a reactive resin.

21. The tape of claim 15 in which the binder is a thermoplastic resin.

22. The tape of claim 1 in which the magnetic servo track pattern comprises a longitudinal magnetic recording of different frequency ranges.

23. A magnetic tape comprising:
a substrate having disposed on opposite sides thereof a magnetic-layered recording surface and a non-recording surface containing a magnetic servo tracking pattern, the non-recording surface including two layers, an outer layer containing inorganic particles and an inner layer containing magnetic particles.

24. The magnetic tape of claim 23 in which a size of the inorganic particles is in the range of about 0.02 µm to 0.035 µm.

25. The magnetic tape of claim 23 in which the inorganic particles are contained in a binder.

26. The magnetic tape of claim 25 in which the inorganic particles comprise about 30% to 50% by weight of the binder.

27. The magnetic tape of claim 23 in which the inorganic particles are carbon black.

28. The magnetic tape of claim 23 in which the inorganic particles are metallic powders.

29. The magnetic tape of claim 23 in which the inorganic particles are metallic sulfides.

30. The magnetic tape of claim 23 in which a size of the magnetic particles is in the range of about 0.10 µm to 0.30 µm.

31. The magnetic tape of claim 23 in which the magnetic particles are contained in a binder.

32. The magnetic tape of claim 31 in which the binder is about 10 to 40 parts by weight per 100 parts by weight of the magnetic particles.

33. The magnetic tape of claim 23 in which the magnetic particles are ferromagnetic hexagonal ferrite powder.

34. The magnetic tape of claim 23 in which the magnetic particles are ferromagnetic metallic powder.

35. The magnetic tape of claim 23 in which the magnetic particles are ferromagnetic iron oxide powder.

36. The magnetic tape of claim 23 in which the magnetic servo track pattern comprises a longitudinal magnetic recording of different frequency ranges.

37. A tape comprising:
a recording layer bonded to a first side of a substrate layer; and
a multi-layer backcoat layer bonded to a second side of the substrate, the backcoat layer including an inner magnetic layer containing a magnetic servo track pattern.

38. The tape of claim 37 in which the backcoat layer includes an outer magnetic layer.

39. The tape of claim 37 in which the inner magnetic layer includes magnetic particles having a particle size in the range of about 0.10 µm to 0.30 µm contained in a binder.

40. The tape of claim 38 in which the outer magnetic layer includes magnetic particles having a particle size in the range of about 0.02 µm to 0.035 µm contained in a binder.
